Europäisches Patentamt

(19) **European Patent Office**

**Office européen des brevets**

(11) Publication number: **0 018 801**
**A1**

(12) # EUROPEAN PATENT APPLICATION

(21) Application number: **80301370.5**

(22) Date of filing: **25.04.80**

(51) Int. Cl.³: **H 02 K 21/12**
H·02 K 3/47, H 02 K 9/02
H 02 K 19/20

(30) Priority: **27.04.79 US 34086**

(43) Date of publication of application:
**12.11.80 Bulletin 80/23**

(84) Designated Contracting States:
**AT BE CH DE FR GB IT LI LU NL SE**

(71) Applicant: **THE GARRETT CORPORATION**
**9851-9951 Sepulveda Boulevard P.O. Box 92248**
**Los Angeles, California 90009(US)**

(72) Inventor: **McCarty, Frederick B.**
**1366 Stonewood Court**
**San Pedro California(US)**

(74) Representative: **Taylor, Duncan Alistair et al,**
**KILBURN & STRODE 30 John Street**
**London WC1N 2DD(GB)**

(54) **Rotary electrical machines.**

(57) In a rotary electrical machine (10), the stator (24) is gener-
ally flat, and is built up from copper conductors, bonded
together to be self-supporting, without any iron. The flux
through the stator passes from pole bodies (16), through the
stator, to pole bodies (18), the pole bodies (16, 18) both form-
ing part of the rotor of the machine.

Fig. 2.

EP 0 018 801 A1

Croydon Printing Company Ltd

0018801

1.

"ROTARY ELECTRICAL MACHINES"

FIELD OF THE INVENTION

This invention relates to rotary electrical machines, suitable for use as motors and/or generators. It is particularly concerned with the stator structure of such a machine.

THE PRIOR ART

Previously known electrical machines employ a stator structure which includes an appreciable amount of iron, as part of the magnetic circuit of the machine. The primary purpose of this iron is to reduce the reluctance of the magnetic circuit, to obtain acceptable excitation losses. A secondary purpose is to act as a support for the stator conductors. However, the iron normally encloses the stator conductors, so that the heat developed in the conductors (copper loss) cannot be transferred directly to a cooling air flow. Heat is also developed in the stator iron itself (iron loss). Thus, the presence of the stator iron tends to aggravate the problem of limiting the stator temperature rise.

SUMMARY OF THE INVENTION

According to the present invention, a rotary electrical machine having a rotor, a stator comprising a plurality of coils, and a magnetic circuit by means of which a magnetic flux may be linked with the stator coils, is characterised in that the magnetic flux linking the stator coils passes from first parts of the magnetic circuit, through the stator, to second parts of the magnetic circuit, substantially without passing through any ferromagnetic material between the first

2.

and second parts of the magnetic circuit. Preferably, the conductors forming the stator coils provide substantially all the structural strength of the stator.  The stator may have the general form of an annular sheet of revolution, which is supported from a frame or housing of the machine by only one of its circular edges.

Thus, most of the surface of the stator may be directly exposed to a flow of coolant such as cooling air.

The invention may be carried into practice in various ways, but three specific embodiments will now be described by way of example, with reference to the accompanying drawings.

BRIEF DESCRIPTION OF THE DRAWINGS

Figure 1 is an isometric view of a rotary permanent magnet electrical machine embodying the invention, which machine has been sectioned along an axial plane;

Figure 2 is an axial section through the machine of Figure 1;

Figure 3 is a perspective view of part of a stator coil assembly forming part of the machine of Figures 1 and 2;

Figure 4 is a section taken on the line 4-4 of Figure 3;

Figure 5 is a view, seen along the axis of rotation, of a rotor member of the electrical machine of Figure 1;

Figure 6 is an axial section through part of a second permanent magnet electrical machine embodying the invention; and

Figure 7 is an axial section through part of a third permanent magnet electrical machine embodying the invention.

DETAILED DESCRIPTION OF THE PREFERRED EMBODIMENT

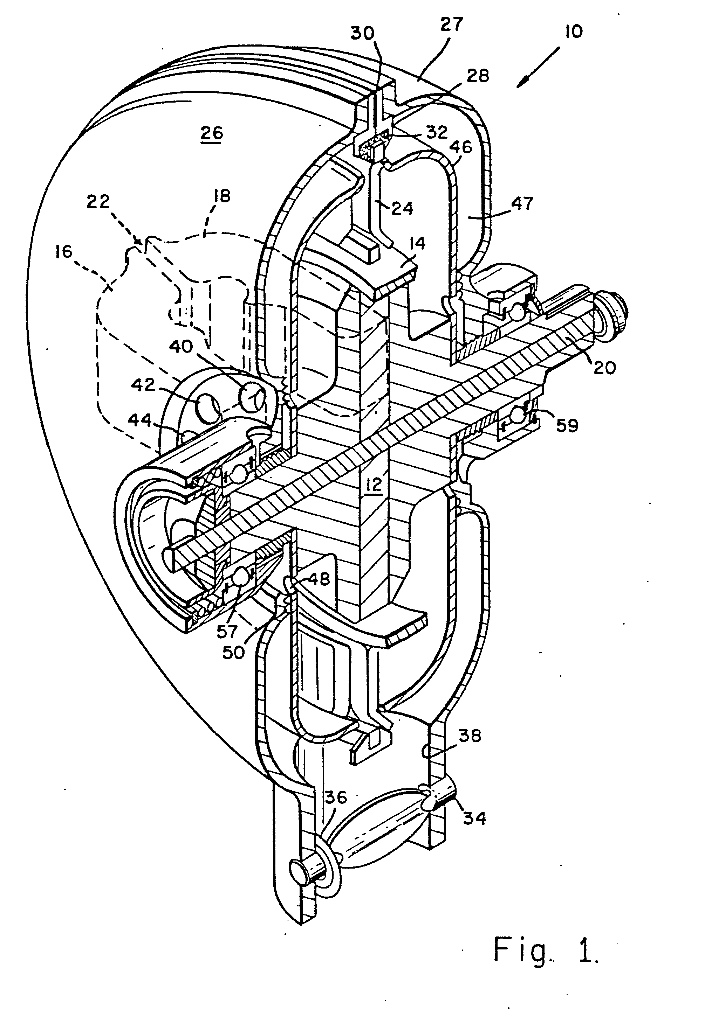

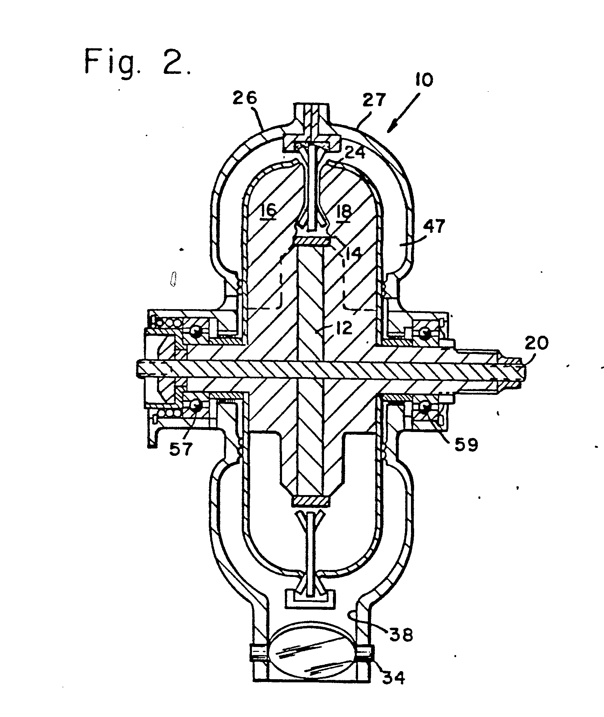

Figures 1 and 2 show a permanent magnet electrical machine 10, having a permanent magnet rotor which is borne in bearings 57 and 59, and which includes a disc shaped axially polarized permanent magnet 12. The permanent magnet 12 could be of any type of permanent magnet material, one such material being rare-earth cobalt. A non-magnetic retaining hoop 14 surrounds the magnet 12, to ensure that the magnet is stressed only in compression, so that the magnet's integrity is unaffected by any structural flaws which may be characteristic of the permanent magnet material.

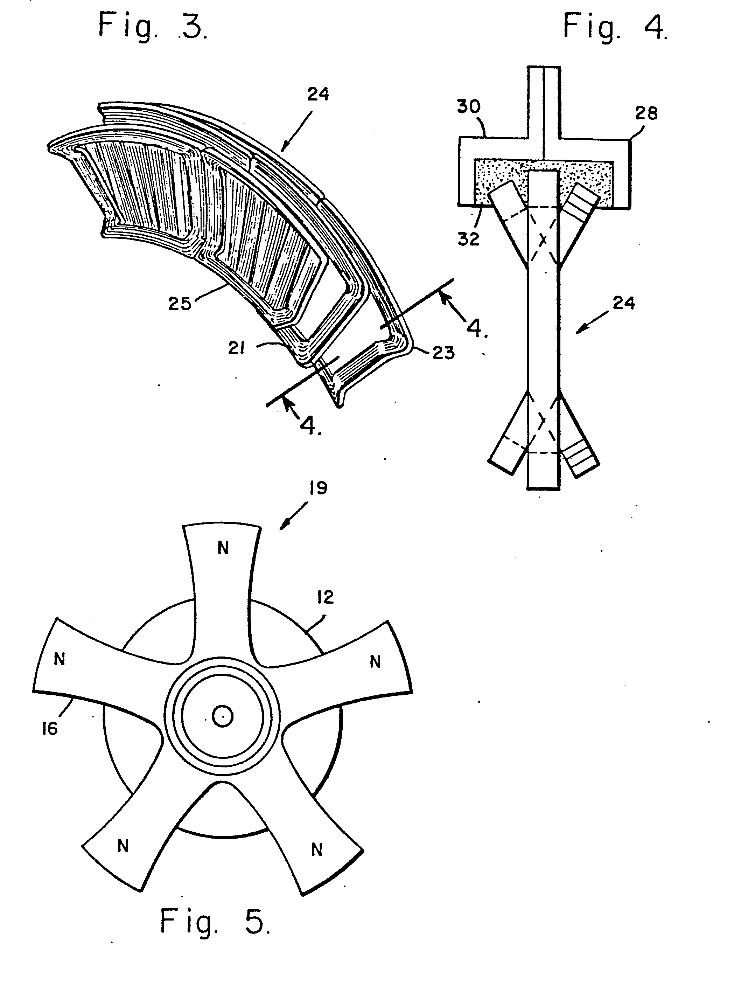

The rotor includes, in addition to the magnet 12, a front rotor member 19 (shown in Figure 5) and an identical rear rotor member (not separately shown). Each of the rotor members consists of a plurality (in this case five) of similarly shaped equiangularly spaced pole bodies, two of which are shown at 16 and 18 in Figures 1 and 2. A non-magnetic tie bolt 20 holds together the magnet 12 and the rotor members. The tie bolt 20 is particularly useful for machines which operate at high speeds; for machines which operate at lower speeds, the tie bolt is not strictly necessary. Each of the pole bodies (such as 16) of the front rotor member 19 lies directly opposite one of the pole bodies (such as 18) of the rear rotor member, with an air gap separating the two pole bodies; the air gap between the pole bodies 16 and 18 is shown at 22 in Figure 1. A generally planar, annular, stator coil assembly 24 is mounted to extend around the rotor, and lies in the air gaps between the pairs of pole bodies. The coil assembly 24 has the same number of pole pairs as each of the rotor members has pole bodies. Thus, as the rotor rotates about the centre axis, the flux linkage through any given part of the stator coil assembly 24 will change, thus inducing an electromotive force (e.m.f.) in the stator coils. The stator coil assembly 24 is attached to two housing shells 26 and 27 by means of a stator assembly supporting structure or clamp consisting of two ring sections 28 and 30. The stator coils are affixed to the ring sections 28 and 30 by means of a dielectric moulding or adhesive compound 32 (see Figure 4). In place of the two clamp ring sections 28 and 30, a single clamp could be used. The housing shells 26 and 27 in the preferred embodiment are of cast stainless steel to provide rotor fragment containment in the event of a destructive overspeed of the rotor. Other materials, including non-ferrous and plastics materials, could be used for the housing shells 26 and 27 if a separate structure for containing rotor fragments is provided.

The pole bodies such as 16 and 18 act as a centrifugal fan to cause a flow of air through the machine. This cools the stator assembly 24, but incurs a pumping loss. The pumping loss is limited automatically to the amount required to meet the stator cooling requirements, by means of a butterfly valve 34. The valve 34 is actuated by a bimetal coil actuator 36 in an exit air duct 38 to control the air flow through the machine 10. The actuator 36 senses the air temperature in the air exit duct 38 and automatically adjusts the valve 34 to allow more or less air flow through the machine 10, according to cooling needs. The valve 34 is very useful to minimize the pumping loss for machines which operate over a wide speed range. For constant speed machines or for machines which operate over a narrow speed range such a valve is not necessary.

6.

The cooling air flow past the rotor is contained within and guided by a windage shroud 46, which encloses and rotates with the permanent magnet 12 and the rotor members, and helps to reduce air friction losses. The air flow enters the casing of the machine through entry holes, three of which are shown at 40, 42 and 44 in Figure 1, and then enters the windage shroud 46 through inlet holes 48 in the shroud. The air is then guided by the shroud 46 to flow past and cool the stator coil assembly 24. The hot air is then exhausted to the space (shown at 47) outside the shroud 46, and out through the air exit duct 38. A plurality of seals 50 are provided on the shells 26 and 27 to prevent recirculation of the hot exit air into the inlet holes 48.

The stator assembly 24 is shown in greater detail in Figures 3 and 4, and consists of three types of coils, typified by the coils shown at 21, 23 and 25, which are each approximately rectangular. The coil 21 is flat, whereas the coils 23 and 25 are formed to a non-planar shape, the sides of the coil 23 which extend circumferentially of the rotor assembly 24 being displaced in one axial direction out of the general plane of the assembly 24, while the corresponding sides of the coil 25 are displaced in the opposite axial direction out of this plane. Forming the three sets of coils 21, 23 and 25 in this manner allows them to fit together compactly as a structural unit. The conductors of the coils 21, 23 and 25 are flat, insulated copper ribbon conductors oriented with their

0018801

maximum dimension parallel to the flow of flux so as to minimize eddy loss. The ribbon conductors provide the desired rigidity to the coils 21, 23 and 25 which are bonded together. The ribbon conductors provide superior rigidity, better heat transfer, better space utilization and lower eddy loss as compared to round wire, mush-wound coils or substrate-mounted, printed circuit conductors.

The inherent rigidity and structural properties of the ribbon conductors are sufficient to maintain the shape of the stator assembly 24. The packing factor for ribbon conductors is about twice that of round conductors. That fact, coupled with the elimination of iron teeth, nearly quadruples the space available for the stator copper, as compared with conventional machines.

Since the stator coils of different phases are pre-formed and not intertwined, phase-to-phase faults are unlikely.

Also, with the elimination of stator iron the possibility of ground faults is virtually eliminated.

Other advantages resulting from this construction of the stator coil assembly 24 include the fact that the interpolar leakage flux, which generates a negative electromotive force (e.m.f.) component opposing the e.m.f. of the main flux, is very low. Further, the elimination of stator teeth substantially reduces the stator leakage reactance. As compared with conventional machines, the demagnetizing effect of the stator load current is reduced because of the large reluctances of the stator gap and the magnet.

Because the stator assembly 24 is totally self-supported within the air gap region, no extraneous materials adversely affecting the magnetic path are used. The passive supporting structure consisting of the ring sections 28 and 30 is external to the active air gap region.

Another advantage of the stator assembly 24 is that since virtually all of the surface area of the stator assembly 24 is directly exposed to the flow of cooling air the temperature rise within the copper is minimized. There are no obstructions around the stator assembly 24 to inhibit heat transfer from the . stator assembly 24 to the air. This permits operation at high current density to reduce the amount of copper required in the stator and consequently permits reduction of the air gap dimensions and of the size of the permanent magnet 12.

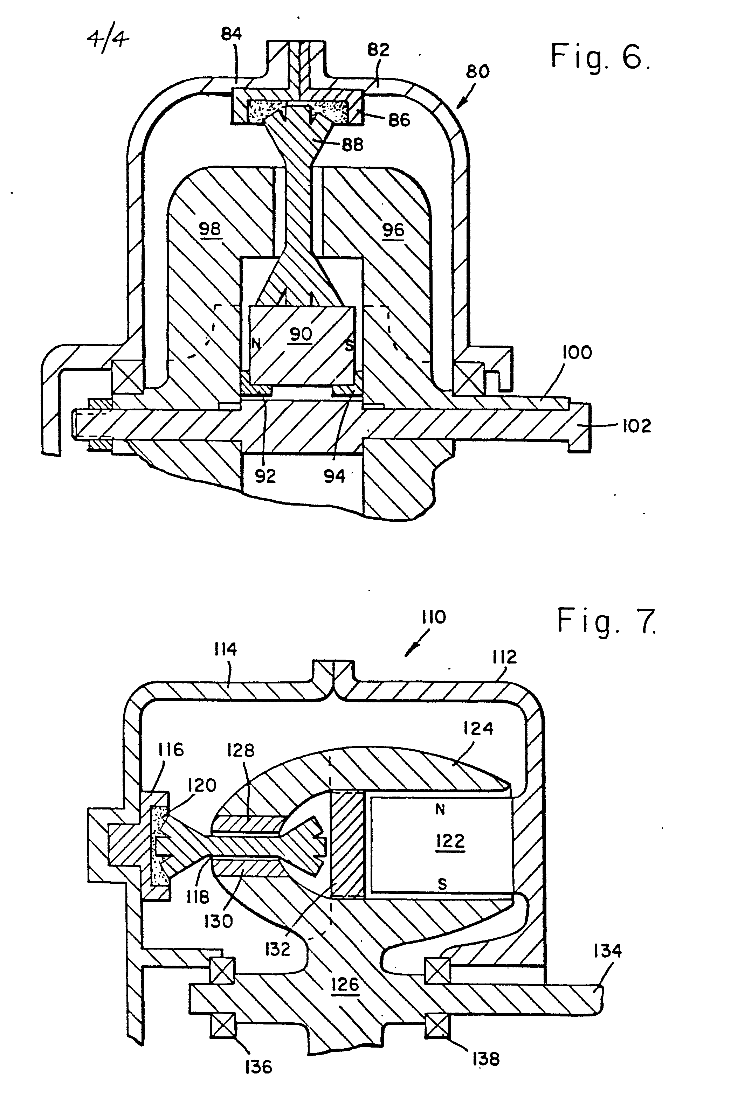

Another machine embodying the present invention is illustrated at 80 in Figure 6. The machine 80 consists of housing shells 82 and 84 which fit together to form the housing for the machine components and which hold a stator assembly supporting structure 86 in place. A stator assembly 88 is attached at its outer periphery to the supporting structure 86. The inner periphery of the stator 88 supports and is affixed to a non-rotating, annular, axially polarised permanent magnet 90. Two bushings 92 and 94 stabilize the axial position of the magnet 90 between two rotor members each having a plurality of poles, two of the poles being shown at 96 and 98. A rotor shaft 100 is connected to one of the rotor members, and a non-magnetic tie bolt 102 ties the rotor bodies together, to be rotated as a unit by the shaft 100.

The rotor of the electrical permanent magnet machine 80 can operate at very high speeds, not limited by the structural properties of the permanent magnet, because in this embodiment the permanent magnet 90 is held stationary.

Figure 7 is a section through a radial field permanent magnet electrical machine 110 embodying the invention. The machine 110 consists of two housing shells 112 and 114 and a clamp 116 which is affixed to the housing shell 114. A generally cylindrical stator assembly 118 is securely joined to the clamp 116 by means of a dielectric moulding compound 120. A non-rotating, annular, radially polarised permanent magnet 122 is affixed to the inner surface of the housing shell 112. The machine also includes a rotor 126, borne in bearings 136 and 138 and coupled to a shaft 134, and having an inner ring of pole bodies located on the inner side of the stator 118 and the permanent magnet 122, and an outer ring of pole bodies, one of which is shown at 124, located on the radially outer side of the stator and magnet. Each pole body has a removable section, as shown at 128 and 132, for facilitating assembly of the machine 110. A non-magnetic support ring 132 joins the pole bodies 124 to the central part of the rotor 126. The ring 132 can be affixed to the pole bodies by either welding, bolting or HIP (hot isostatic pressure) bonding.

CLAIMS

1. A rotary electrical machine having a rotor, a stator comprising a plurality of coils, and a magnetic circuit by means of which a magnetic flux may be linked with the stator coils,

characterised in that the magnetic flux linking the stator coils (21, 23, 25) passes from first parts (16, 96, 124) of the magnetic circuit, through the stator (24, 88, 118), to second parts (18, 98, 126) of the magnetic circuit, substantially without passing through any ferromagnetic material between the first and second parts (16,18; 96,98; 124,126) of the magnetic circuit.

2. A machine as claimed in Claim 1, in which the conductors forming the stator coils (21, 23, 25) provide substantially all the structural strength of the stator (24, 88, 118).

3. A machine as claimed in Claim 1 or Claim 2, in which, at least over that part of the stator (24, 88, 118) through which the magnetic flux passes, the stator (24, 88, 118) consists of only a single layer of electrical conductors forming the stator coils (21, 23, 25), the conductors extending generally normally to the magnetic flux.

4. A machine as claimed in Claim 1 or Claim 2 or Claim 3, in which the stator (24, 88, 118) has the general form of an annular sheet of revolution, which is supported from a frame or housing (26,27; 82,84; 114) of the machine by only one of its circular edges.

5. A machine as claimed in any of the preceding claims, in which the first and second parts (16,18; 96,98; 124,126) of the magnetic circuit are formed by first and second rings of pole bodies forming part of the rotor.

6. A machine as claimed in Claim 5, which also includes a shroud (46) enclosing the rotor, the shroud having coolant inlet holes (48) remote from its outer circumference, and a circumferential slot whose edges lie one on each side of the stator (24), leaving a gap for coolant flow between the shroud and the stator (24), whereby rotation of the rotor induces a coolant flow into the shroud (46) through the holes (48) and out through the circumferential slot.

7. A machine as claimed in Claim 6, which also includes a regulating device (34) arranged to control the coolant flow.

8. A machine as claimed in any of the preceding claims, in which the rotor includes magnetising means (12) providing the magnetic flux in the magnetic circuit.

9. A machine as claimed in any of Claims 1 to 7, in which the magnetic circuit includes stationary magnetising means (90, 122) providing the magnetic flux in the magnetic circuit.

12.

10.  A machine as claimed in Claim 4 and Claim 9,
in which the stationary magnetising means (90) is
supported on the circular edge of the stator (24)
which is not connected to the frame or housing of the
machine.

Fig. 1.

0018801

Fig. 2.

3/4

Fig. 3.

Fig. 4.

Fig. 5.

0018801

4/4

Fig. 6.

Fig. 7.

European Patent Office

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| | <u>FR - E - 2 239 035</u> (SAGEM)<br><br>* Page 3, lines 14-16; page 3, line 32 - page 4, line 5; page 4, lines 18-27; figures 2,3 *<br><br>-- | 1,3-5, 8 |
| | <u>FR - E - 2 666 354</u> (SAGEM)<br><br>* Page 3, lines 14-19; page 4, lines 15-23; page 5, lines 19-30; figure 6 *<br><br>-- | 1-5,8 |
| | <u>FR - A - 1 286 730</u> (NORMACEM)<br><br>* Page 1, left-hand column, lines 28-35; page 1, right-hand column, lines 28-36; page 2, right-hand column, lines 32-36 *<br><br>-- | 1,3-5, 9 |
| | <u>FR - A - 2 266 970</u> (CAN. GEN. E-LECTR. CO. LTD.)<br><br>* Page 7, lines 2-12; figure 2 *<br><br>-- | 2,4 |
| | <u>US - A - 2 428 781</u> (BOWLUS)<br><br>* Column 2, lines 1-31; column 3, lines 1-19; figure 3 *<br><br>-- | 2,4,8 |
| | <u>GB - A - 890 894</u> (BRITISH ELECTR. REPAIRS LTD.)<br><br>* Page 1, left-hand column, line 37 - right-hand column, line 49; page 1, right-hand column, lines 55-61 *<br><br>-- ./. | 5,9 |

### CLASSIFICATION OF THE APPLICATION (Int. Cl. ³)

H 02 K 21/12
3/47
9/02
19/20

### TECHNICAL FIELDS SEARCHED (Int.Cl. ³)

H 02 K 21/12
21/20
21/08
19/18
19/20
3/47
9/02

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family.
corresponding document

The present search report has been drawn up for all claims

| Place of search | Date of completion of the search | Examiner |
|---|---|---|
| The Hague | 27-06-1980 | TANGOCCI |

EPO Form 1503.1 06.78

European Patent
Office

**EUROPEAN SEARCH REPORT**

| | **DOCUMENTS CONSIDERED TO BE RELEVANT** | | CLASSIFICATION OF THE APPLICATION (Int. Cl.) |
|---|---|---|---|
| Category | Citation of document with indication, where appropriate, of relevant passages | Relevant to claim | |
| | GB - A - 1 140 021 (LLOYD DYNAMO-WERKE) <br><br> * Page 3, right-hand column, line 124 - page 4, left-hand column, line 5; page 4, left-hand column, lines 54-61; figures 8-10 * <br><br> -- | 5,9 | |
| | FR - A - 2 230 107 (SAGEM) <br><br> * Page 3, lines 3-12 * <br><br> -- | 10 | |
| | DE - C - 155 277 (BARTELEMUS, DONAT & CIE.) <br><br> * Page 1, left-hand column, line 34 - right-hand column, line 41 * <br><br> -- | 6 | TECHNICAL FIELDS SEARCHED (Int. Cl.) |
| | DE - C - 447 624 (LORENZ TEMPEL-HOF UND KARLSCHMIDT) <br><br> * Page 1, right-hand column, lines 27-29; page 2, left-hand column, lines 32-34 * <br><br> -- | 7 | |
| A | DE - A - 2 533 187 (SCHMIDER, PAPST MOTOREN) <br><br> * Page 8, lines 19-25; figure 6 * <br><br> -- | | |
| A | FR - A - 2 128 770 (MATSUSHITA) <br><br> * Page 3, lines 6-14; figure 2 * <br><br> -- | | |
| | ./. | | |

EPO Form 1503.2  06.78

European Patent Office

**EUROPEAN SEARCH REPORT**

Application number

EP 80 30 1370

| | DOCUMENTS CONSIDERED TO BE RELEVANT | | CLASSIFICATION OF THE APPLICATION (Int Cl ³) |
|---|---|---|---|
| Category | Citation of document with indication where appropriate of relevant passages | Relevant to claim | |
| A | CH - A - 403 049 (AEROJET-GEN. CORP.) <br><br> * Page 9, right-hand column, line 112 - page 10, left-hand column, line 15 * <br><br> -- | | |
| A | FR - A - 2 271 696 (PAPST MOTOREN A.G.) <br><br> * Page 6, lines 14-17; figures 1,2 * <br><br> ---- | | TECHNICAL FIELDS SEARCHED (Int. Cl. ³) |

EPO Form 1503.2 06.78